# EUROPÄISCHE PATENTSCHRIFT

(11) **EP 3 452 702 B1**
(45) Veröffentlichungstag und Bekanntmachung des Hinweises auf die Patenterteilung: **06.05.2020**
(21) Anmeldenummer: 17712977.2
(22) Anmeldetag: 22.03.2017
(51) Int. Cl.: F01D 25/24, F02C 6/12, F01D 5/26, F01D 5/18, F01D 9/02, F01D 5/28

(54) **TURBINENGEHÄUSE FÜR EINEN TURBOLADER EINER BRENNKRAFTMASCHINE SOWIE TURBOLADER**
TURBINE HOUSING FOR A TURBOCHARGER OF AN INTERNAL COMBUSTION ENGINE, AND TURBOCHARGER
CARTER DE TURBINE POUR TURBOCOMPRESSEUR DE MOTEUR À COMBUSTION INTERNE ET TURBOCOMPRESSEUR

(30) Priorität: 04.05.2016 DE 102016207745
(43) Veröffentlichungstag der Anmeldung: 13.03.2019
(73) Patentinhaber: Continental Automotive GmbH, 30165 Hannover (DE)
(72) Erfinder: HILLER, Marc, 55232 Alzey (DE); BOGNER, Mathias, 94315 Straubing (DE)
(86) Internationale Anmeldenummer: PCT/EP2017/056856
(87) Internationale Veröffentlichungsnummer: WO 2017/190884

(56) Entgegenhaltungen:
- EP-A1- 0 374 603
- EP-A1- 2 592 240
- WO-A1-2008/141927
- US-A1- 2013 004 291

## Beschreibung

Die Erfindung betrifft ein Turbinengehäuse für einen Turbolader einer Brennkraftmaschine. Die Erfindung betrifft darüber hinaus einen Turbolader mit einem solchen Turbinengehäuse.

Aus der DE 10 2008 011 258 A1 ist ein gekühltes Gehäuse für einen Turbolader bekannt. Aus der EP 2 889 455 A1 ist ein wassergekühlter Turbolader mit Wärmeisolierung bekannt. Aus der WO 2008/141927 ist ein Turbinengehäuse mit einer Außenschale aus metallischem Werkstoff und einer Innenschale aus keramischen Werkstoff bekannt. Aus der EP 0 374 603 A1 ist eine Wärmedämmung für heiße Gase führende doppelwandige Bauteile, insbesondere von Brennkraftmaschinen oder thermischen Turbomaschinen, mit einer Innenwand aus einem hochwarmfesten Metall sowie einer darauf angeordneten Schicht aus einem Wärmedämmmaterial bekannt, auf die ein die Außenwand bildendes Gussteil gegossen ist.

Abgasturbolader werden vermehrt zur Leistungssteigerung bei Kraftfahrzeug-Verbrennungsmotoren eingesetzt. Dies geschieht immer häufiger mit dem Ziel, den Verbrennungsmotor bei gleicher oder gar gesteigerter Leistung in Baugröße und Gewicht zu reduzieren und gleichzeitig den Verbrauch und somit den CO₂-Ausstoß, im Hinblick auf immer strenger werdende gesetzliche Vorgaben diesbezüglich, zu verringern. Das Wirkprinzip besteht darin, die im Abgasstrom enthaltene Energie zu nutzen, um einen Druck in einem Ansaugtrakt des Verbrennungsmotors zu erhöhen und so eine bessere Befüllung eines Brennraumes des Verbrennungsmotors mit Luft-Sauerstoff zu bewirken. Somit kann mehr Treibstoff, wie Benzin oder Diesel, pro Verbrennungsvorgang umgesetzt werden, also die Leistung des Verbrennungsmotors erhöht werden.

Dazu weist der Abgasturbolader eine im Abgastrakt des Verbrennungsmotors angeordnete Abgasturbine, einen im Ansaugtrakt angeordneten Frischluftverdichter und ein dazwischen angeordnetes Läuferlager auf. Die Abgasturbine weist ein Turbinengehäuse und ein darin angeordnetes, durch den Abgasmassenstrom angetriebenes Turbinenlaufrad auf. Der Frischluftverdichter weist ein Verdichtergehäuse und ein darin angeordnetes, einen Ladedruck aufbauendes Verdichterlaufrad auf. Das Turbinenlaufrad und das Verdichterlaufrad sind auf den sich gegenüberliegenden Enden einer gemeinsamen Welle, der sogenannten Läuferwelle, drehfest angeordnet und bilden so den sogenannten Turboladerläufer. Die Läuferwelle erstreckt sich axial zwischen Turbinenlaufrad und Verdichterlaufrad durch das zwischen Abgasturbine und Frischluftverdichter angeordnete Läuferlager und ist in diesem, in Bezug auf die Läuferwellenachse, radial und axial drehgelagert. Gemäß diesem Aufbau treibt das vom Abgasmassenstrom angetriebene Turbinenlaufrad über die Läuferwelle das Verdichterlaufrad an, wodurch der Druck im Ansaugtrakt des Verbrennungsmotors, bezogen auf den Frischluftmassenstrom hinter dem Frischluftverdichter, erhöht und dadurch eine bessere Befüllung des Brennraumes mit Luft-Sauerstoff bewirkt wird.

Eine Aufgabe, die der Erfindung zugrunde liegt, ist es, ein Konzept für ein Turbinengehäuse eines Turboladers anzugeben, welches zu einem effizienten Betrieb eines Turboladers beiträgt.

Es wird ein Turbinengehäuse für einen Turbolader einer Brennkraftmaschine gemäß unabhängigem Anspruch 1 offenbart. Das Turbinengehäuse weist einen Ringkanal zum Leiten eines Abgasmassenstroms auf ein in dem Turbinengehäuse anordenbares Turbinenrad auf. Mit anderen Worten ist der Ringkanal in dem Turbinengehäuse derart ausgebildet, dass der Abgasmassenstrom gezielt radial und/oder axial das Turbinenrad anströmen kann. Weiter weist das Turbinengehäuse einen Abgasabführkanal zum Abführen des Abgasmassenstroms aus dem Turbinengehäuse nach einem Anströmen des Turbinenrads auf. Der Abgasabführkanal ist in dem Turbinengehäuse so ausgebildet, dass der Abgasmassenstrom aus dem Turbinengehäuse nach Durchströmen (An-und Umströmen) des Turbinenrads abströmen kann. In einem Bereich einer Innenwand des Ringkanals und in einem Bereich einer Innenwand des Abgasabführkanals ist jeweils ein Isolierungselement angeordnet.

Jedes Isolierungselement dient der thermischen Isolation des Turbinengehäuses in den vorgenannten Bereichen der Innenwände. Mit anderen Worten handelt es sich bei einem Isolierungselement um eine thermische Isolierung oder eine Wärmeisolierung. Dadurch wird das Turbinengehäuse in den besagten Bereichen gegenüber einer Wärme des durch das Turbinengehäuse geführten Abgasmassenstroms im Betrieb des Turboladers isoliert.

Im Bereich der jeweiligen Innenwände bedeutet das, dass zumindest teilweise oder vollständig die Innenwand des Ringkanals beziehungsweise des Abgasabführkanals mit dem jeweiligen Isolierungselement versehen ist. Mit anderen Worten kleiden die Isolierungselemente den Ringkanal beziehungsweise den Abgasabführkanal zumindest teilweise aus oder sind an diesen Innenwänden zumindest teilweise angeordnet. Bei den Isolierungselementen handelt es sich um separate, einzelne Elemente, die nicht miteinander verbunden sind. Anders ausgedrückt weist das Turbinengehäuse nur in vorbestimmten Bereichen im Inneren Isolierungselemente auf.

Bei dem beschriebenen Turbinengehäuse wird eine selektive Wärmeisolierung erreicht, welche einfach durch Einsatz von Isolierungselementen bewerkstelligbar ist. Beispielsweise entfällt ein aufwendiges Einbringen von Isolierungshohlräumen in das Turbinengehäuse. Dadurch wird zu einer geringen Bauraumbeanspruchung durch das Turbinengehäuse beigetragen. Aufgrund der Isolierung im Ringkanal wird verhindert, dass ein nicht unerheblicher Teil der dem Abgasmassenstrom innewohnenden Wärmeenergie über das Turbinengehäuse oder eine zusätzlich um den Ringkanal vorgesehene lokale Kühlung abgeführt wird. Dies ist insbesondere der Fall, wenn das Gehäuse aus einem Metallwerkstoff hergestellt ist, welcher eine gute Wärmeleitung gewährleistet. Durch das Isolierungselement im Ringkanalbereich kann der Abgasmassenstrom im Vergleich zu einem nicht-isolierten Ringkanal mit einer erhöhten Temperatur (und somit erhöhter Enthalpie) das Turbinenrad anströmen, wodurch zu einer besonders effizienten Turbinenleistung beziehungsweise einem effizienten Turbinenwirkungsgrad beigetragen wird. Dies ist insbesondere für die Verbesserung des sogenannten "time to torque" (englisch sinngemäß für Zeit bis zum Erreichen eines gewünschten Drehmoments) und des "low end torque" (englisch sinngemäß für unteres Drehzahlende, bei dem das gewünschte Drehmoment noch erreicht wird) des Verbrennungsmotors vorteilhaft. Ein Verlust an Wärmeenergie vor dem Anströmen des Turbinenrads wäre thermodynamisch unerwünscht, da Energie unter anderem zum Antreiben des Turbinenrads verloren ginge. Das beschriebene Turbinengehäuse trägt somit zu einem effizienten Betrieb eines Turboladers bei. Weiter wird dazu beigetragen, Bauteiltemperaturen des Turbinengehäuses auf ein benötigtes Niveau selektiv zu senken.

Aufgrund der beiden Isolierungselemente können geringere Anforderungen, insbesondere mechanischer Art, an das Turbinengehäuse im Vergleich zu einem nicht-isolierten Turbinengehäuse gestellt werden. Beispielsweise kann ein weniger warmfester Werkstoff verwendet werden, was zu Kosteneinsparungen für das Turbinengehäuse führt. Es muss beispielsweise kein besonders teurer, hochwarmfester Werkstoff für das Turbinengehäuse verwendet werden. Ein weiterer Vorteil ist, dass beispielsweise keine größeren Wärmemengen in einem Kühlsystem abgeführt werden müssen, wozu gegebenenfalls Anpassungen des Kühlsystems des Fahrzeugs notwendig wären, was nachteilig hinsichtlich Kosten und gegebenenfalls eines Bauraumbedarfs wäre. Weiter ist es nicht notwendig, eine umfangreiche, gesamtheitliche Kühlung vorzusehen, beispielsweise in Form eines Kühlmantels mit Wasserkühlung, um Bauteiltemperaturen auf ein entsprechend niedriges Niveau zu bringen, so dass die Materialien die Belastungen im Betrieb aushalten. Auch kann auf optionale Hitzeschutzbleche verzichtet werden, die bei der Montage eines Turboladers eingelegt und mechanisch (Klemmen, Verschrauben oder dergleichen) fixiert würden.

Das Turbinengehäuse weist bezüglich einer Längsachse des Turbinengehäuses zwischen dem Abgasabführkanal und dem Ringkanal eine Dichtkontur auf, die frei von einem Isolierungselement ist. Dadurch wird zu der oben beschriebenen selektiven Wärmeisolierung des Turbinengehäuses beigetragen. Das Aufbringen von Isolierungen oder Isolierungselementen ist typischerweise toleranzbehaftet, was insbesondere beim Zusammenbau des Turboladers nachteilig sein kann. Bei der Dichtkontur handelt es sich um einen Turbinengehäuseabschnitt, der mit einer äußeren (in eine durch eine Rotationsachse des Turbinenrads verlaufende Ebene projizierte) Kontur des Turbinenrads einen Spalt ausbildet. Mit anderen Worten ist die Dichtkontur ein Innenwandabschnitt des Turbinengehäuses. Diese Dichtkontur ist maschinell so bearbeitet, dass das Turbinenrad reibungsfrei mit geringstmöglichem Abstand zum Turbinengehäuse um die Rotationsachse drehen kann. Der Spalt sollte dabei so klein sein, dass nahezu keine Energie des Abgasmassenstroms durch Vorbeiströmen oder Umströmen des Turbinenrads verlorengeht. Gemäß der Ausgestaltung ist auf ein Isolierungselement im Bereich der Dichtkontur verzichtet, um die Toleranzkette des Spaltes möglichst gering zu halten.

Das Turbinengehäuse ist in einem Bereich eines Wastegateventilsitzes, in einem Bereich eines Lagergehäuseanschlussflansches und in einem Bereich eines Abgasanschlussflansches frei von einem Isolierungselement. Dadurch wird analog zu oben zu der selektiven Wärmeisolierung beigetragen. Wie oben beschrieben, handelt es sich bei diesen Bereichen um maschinell bearbeitete Bereiche, an welche hohe Toleranzanforderungen gestellt werden.

Das Turbinengehäuse weist eine lokale Kühlung auf im Bereich der Dichtkontur, im Bereich des Lagergehäuseanschlussflansches und im Bereich des Abgasanschlussflansches. Bei der Dichtkontur, dem Lagergehäuseanschlussflansch (etwa im Bereich der sogenannten p3-Seite oder des sogenannten p3-Raumes des Turbinengehäuses) sowie dem Abgasanschlussflansch (etwa im Bereich der sogenannten p4-Seite oder des sogenannten p4-Raumes des Turbinengehäuses) handelt es sich um Bereiche des Turbinengehäuses, an die hohe Toleranzanforderungen aufgrund der mechanischen Verbindung zu anderen Bauteilen gestellt sind, wie oben mit Bezug auf die Dichtkontur erwähnt. In diesen Bereichen wird lokal eine Kühlung vorgesehen, so dass das Turbinengehäuse selektiv im Zusammenspiel mit den Isolierungen gekühlt wird. Mit anderen Worten wird selektiv nur in den Bereichen des Turbinengehäuses gekühlt, in denen hohe Anforderungen an mechanische Toleranzen gestellt sind. Dadurch kann das Turbinengehäuse aus einem Leichtmetallwerkstoff, insbesondere einem günstigen, nicht temperaturhochfesten Werkstoff hergestellt werden, was zu einer kostengünstigen Herstellung des Turbinengehäuses und somit eines Turboladers beiträgt. Durch die Kombination aus Isolierung und Kühlung können die Bauteiltemperaturen des Turbinengehäuses auf ein benötigtes Niveau gesenkt werden. Dadurch kann beispielsweise bei einer fluidischen Kühlung eine benötigte Kühlmittelmenge und eine in einem Kühlkreislauf eingetragene Wärmemenge auf ein Minimum reduziert werden. Insgesamt wird zu einem erhöhten Turbinenwirkungsgrad beigetragen insbesondere im Vergleich zu umfänglich vollständig gekühlten Gehäusen. Weiterhin kann durch die geschickte Unterteilung und Kombination der Isolierungselemente und der Kühlungen zusätzlich die Kühlleistung optimal auf ein Verformungsverhalten des Turbinengehäuses, insbesondere im Bereich der Dichtkontur, kalibriert werden. Es muss keine gesamtheitliche Kühlung, sondern nur eine selektive Kühlung vorgesehen werden.

Bei der lokalen Kühlung handelt es sich beispielsweise um Wasserkühlungen mit Kühlkanälen oder Kühlmänteln. Beispielsweise handelt es sich um Kanäle im Turbinengehäuse, die mit einem Kühlmedium wie Wasser durchströmt werden können, um Wärme aus dem Turbinengehäuse abzuführen.

Gemäß einer weiteren Ausgestaltung ist zumindest eines der Isolierungselemente als Schicht ausgebildet, die zumindest teilweise auf die entsprechende Innenwand des Ringkanals und/oder des Abgasabführkanals aufgebracht ist. Durch die Beschichtung wird zur thermischen Isolierung des Turbinengehäuses beigetragen. Beispielsweise ist die Schicht eine Wärmedämmschicht (englisch: thermal barrier coating).

Gemäß einer weiteren Ausgestaltung ist zumindest eines der Isolierungselemente als Einlegeelement ausgebildet, welches in das Turbinengehäuse eingelegt, zumindest teilweise eingegossen oder zumindest teilweise umgossen ist. Ein solches Einlegeelement kann auch als sogenanntes "Inlay" bezeichnet werden. Dadurch wird zu einer besonders einfachen und kostengünstigen Montage beigetragen.

Insbesondere wenn das Isolierungselement lediglich in das Gehäuse eingelegt wird, sind keine weiteren Maßnahmen zur Befestigung dessen notwendig. Beispielsweise kann das Einlegeelement entgegen einer Federkraft in das Turbinengehäuse eingelegt und somit eingeklemmt werden. Optional können Bünde oder Absätze im Turbinengehäuse für das Einlegen vorgesehen sein, die zu einer sicheren mechanischen Festlegung des oder der Isolierungselemente beitragen. Durch das Eingießen oder Umgießen des oder der Einlegeelemente wird eine feste Verbindung beim Gießen mit dem Turbinengehäuse erreicht. Demzufolge ist das oder sind die Einlegeelemente vor dem Gießen in eine entsprechende Gießform eingebracht. Im Falle von eingegossenen Inlays wird keine über den gegebenenfalls vorhandenen Formschluss hinaus zusätzliche mechanische Fixierung benötigt. Dies ist insbesondere für Abgasturbolader mit integriertem Wastegateventil von Vorteil.

Das Einlegeelement ist einer Formgebung des Turbinengehäuses, insbesondere einer Formgebung des Ringkanals, auch Spiralgehäuseteils, beziehungsweise des Abgasabführkanals, angepasst. Mit anderen Worten wird ein Formschluss des Einlegeelements in dem Turbinengehäuse erreicht.

Gemäß einer weiteren Ausgestaltung ist das Isolierungselement mehrschichtig ausgebildet, wobei auf eine erste Schicht, die im Betrieb einem Abgasmassenstrom zugewandt ist und einen hochtemperaturbeständigen Werkstoff aufweist, eine zweite, isolierende Schicht folgt. Dadurch wird die isolierende Schicht vor dem direkten Kontakt mit dem Abgasmassenstrom geschützt.

Gemäß einer weiteren Ausgestaltung weist das Isolierungselement eine dritte Schicht auf, die der zweiten Schicht folgt und der entsprechenden Innenwand des Ringkanals und/oder des Abgasabführkanals zugewandt ist. Dadurch ist die isolierende Schicht zwischen der ersten und dritten Schicht angeordnet. Mit anderen Worten schließt die dritte Schicht die isolierende Schicht ab. Beispielsweise ist die isolierende Schicht von der ersten und dritten Schicht gekapselt.

Die isolierende Schicht kann auch als Isoliermaterial oder Isolierschicht bezeichnet werden. Als Isoliermaterial eignen sich beispielsweise Keramikwerkstoffe. Bei der ersten und dritten Schicht handelt es sich beispielsweise um metallische Schichten, wie beispielsweise Schichten aus Aluminiumwerkstoffen. Insbesondere werden beispielsweise Metallwerkstoffe verwendet, die besonders verschleißarm und hochtemperaturfest sind.

Gemäß einer weiteren Ausgestaltung geht die dritte Schicht eine feste Verbindung mit dem Turbinengehäuse ein. Beispielsweise wird lediglich die dritte Schicht analog zu oben bei der Herstellung des Turbinengehäuses eingegossen und geht somit eine feste Verbindung mit dem Gussmaterial ein.

Alternativ ist das Einlegeelement beziehungsweise Inlay so ausgebildet, dass dieses einer Formgebung der Kontur der Innenwand angepasst ist für einen Formschluss mit dem Turbinengehäuse. Mit anderen Worten ist das Einlegeelement hinsichtlich geometrischer Abmessungen dem Turbinengehäuse angepasst.

Gemäß einer weiteren Ausgestaltung weist zumindest eines der Isolierungselemente einen metallischen Schaum auf. Beispielsweise ist die zweite Schicht aus einem metallischen Schaum hergestellt. Dadurch kann die thermische Isolierung erreicht werden. Aufgrund der Porenstruktur wird eine niedrigere Wärmeleitfähigkeit gegenüber einem Vollmaterial erreicht. Beispielsweise schließen die Poren Luft ein, die als Isolierung wirkt.

Gemäß einer weiteren Ausgestaltung weist das Turbinengehäuse eine lokale Kühlung im Bereich eines Wastegateventilsitzes auf. Dadurch werden analog zu oben die erwähnten Vorteile und Funktionen ermöglicht. Insbesondere wird ein Ventilkörper beziehungsweise eine Ventilklappe des Wastegateventils im Betrieb eines Turboladers sehr heiß, so dass Wärme in das Gehäuse eingetragen wird. Dies wäre hinsichtlich eines Verschleißes des Wastegateventils beziehungsweise des Ventilsitzes im Betrieb von Nachteil, insbesondere wenn kein hochtemperaturfester Werkstoff verwendet wird. Um den Wastegateventilsitz gegen Verschleiß und übermäßig große Verformungen, die nachteilig für eine Dichtheit des Sitzes wären, zu schützen, wird mittels der lokalen Kühlung Wärme abgeführt. Dadurch werden die vorgenannten Vorteile und Funktionen besonders ermöglicht.

Des Weiteren wird ein Turbolader für eine Brennkraftmaschine offenbart, der ein Lagergehäuse aufweist, in dem eine Läuferwelle drehbar gelagert ist. Weiter weist der Turbolader ein Turbinenrad auf, welches drehfest auf der Läuferwelle angeordnet ist. Weiter weist der Turbolader ein Turbinengehäuse gemäß einer der vorher beschriebenen Ausgestaltungen auf, welches mechanisch an dem Lagergehäuse festgelegt ist.

Der Turbolader ermöglicht im Wesentlichen die vorgenannten Vorteile und Funktionen.

Weitere Vorteile und Funktionen sind in der nachfolgenden, ausführlichen Beschreibung eines Ausführungsbeispiels offenbart.

Das Ausführungsbeispiel wird unter Zuhilfenahme der angehängten Figuren nachfolgend beschrieben. Gleichartige oder gleichwirkende Elemente sind figurenübergreifend mit den gleichen Bezugszeichen versehen.

In den Figuren zeigen:
- Figur 1: eine schematische Schnittansicht eines Turboladers,
- Figur 2: eine schematische Teilschnittansicht eines Turboladers gemäß einem Ausführungsbeispiel der Erfindung und
- Figur 3: eine schematische Darstellung eines Wastegateventilsitzes des Turboladers gemäß dem Ausführungsbeispiel der Erfindung.

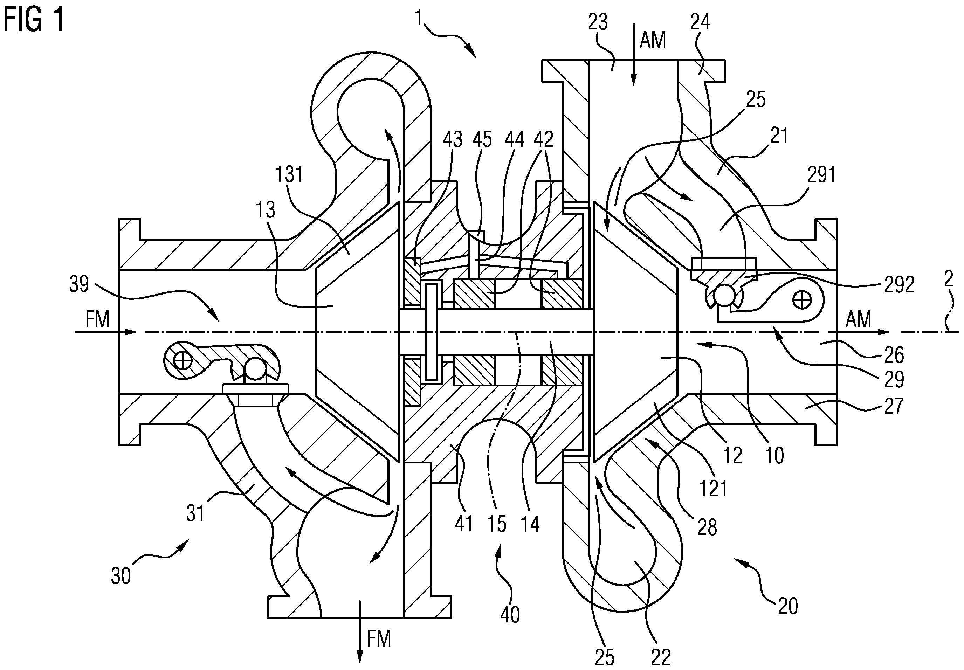

Figur 1 zeigt schematisiert einen exemplarischen Abgasturbolader 1 in Schnittdarstellung, der eine Abgasturbine 20, einen Frischluftverdichter 30 und ein Läuferlager 40 umfasst. Die Abgasturbine 20 ist mit einem Wastegateventil 29 ausgestattet und ein Abgasmassestrom AM ist mit Pfeilen angedeutet. Der Frischluftverdichter 30 weist ein Schub-Umluftventil 39 auf und ein Frischluft-Massestrom FM ist ebenfalls mit Pfeilen angedeutet. Ein sogenannter Turboladerläufer 10 des Abgasturboladers 1 weist ein Turbinenlaufrad 12 (auch Turbinenrad bezeichnet), ein Verdichterlaufrad 13 (auch Verdichterrad bezeichnet) sowie eine Läuferwelle 14 auf (auch Welle bezeichnet) . Der Turboladerläufer 10 rotiert im Betrieb um eine Läuferdrehachse 15 der Läuferwelle 14. Die Läuferdrehachse 15 und gleichzeitig die Turboladerachse 2 (auch Längsachse bezeichnet) sind durch die eingezeichnete Mittellinie dargestellt und kennzeichnen die axiale Ausrichtung des Abgasturboladers 1. Der Turboladerläufer 10 ist mit seiner Läuferwelle 14 mittels zweier Radiallager 42 und einer Axiallagerscheibe 43 gelagert. Sowohl die Radiallager 42 als auch die Axiallagerscheibe 43 werden über Ölversorgungskanäle 44 eines Ölanschlusses 45 mit Schmiermittel versorgt.

In der Regel weist ein gebräuchlicher Abgasturbolader 1, wie in Figur 1 dargestellt, einen mehrteiligen Aufbau auf. Dabei sind ein im Abgastrakt des Verbrennungsmotors anordenbares Turbinengehäuse 21, ein im Ansaugtrakt des Verbrennungsmotors anordenbares Verdichtergehäuse 31 und zwischen Turbinengehäuse 21 und Verdichtergehäuse 31 ein Lagergehäuse 41 bezüglich der gemeinsamen Turboladerachse 2 nebeneinander angeordnet und montagetechnisch miteinander verbunden.

Eine weitere Baueinheit des Abgasturboladers 1 stellt der Turboladerläufer 10 dar, der die Läuferwelle 14, das in dem Turbinengehäuse 21 angeordnete Turbinenlaufrad 12 mit einer Laufradbeschaufelung 121 und das in dem Verdichtergehäuse 31 angeordnete Verdichterlaufrad 13 mit einer Laufradbeschaufelung 131 aufweist. Das Turbinenlaufrad 12 und das Verdichterlaufrad 13 sind auf den sich gegenüberliegenden Enden der gemeinsamen Läuferwelle 14 angeordnet und mit dieser drehfest verbunden. Die Läuferwelle 14 erstreckt sich in Richtung der Turboladerachse 2 axial durch das Lagergehäuse 41 und ist in diesem axial und radial um seine Längsachse, die Läuferdrehachse 15, drehgelagert, wobei die Läuferdrehachse 15 in der Turboladerachse 2 liegt, also mit dieser zusammenfällt.

Das Turbinengehäuse 21 weist einen oder mehrere ringförmig um die Turboladerachse 2 und das Turbinenlaufrad 12 angeordnete, sich schneckenförmig zum Turbinenlaufrad 12 hin verjüngende Abgas-Ringkanäle, sogenannte Abgasfluten 22 oder Spiralgänge auf. Diese Ringkanäle 22 weisen einen jeweiligen oder gemeinsamen, tangential nach außen gerichteten Abgaszuführkanal 23 mit einem Krümmer-Anschlussstutzen 24 zum Anschluss an einen Abgaskrümmer (nicht dargestellt) eines Verbrennungsmotors auf, durch den der Abgasmassenstrom AM in die jeweilige Abgasflut 22 strömt. Die Abgasfluten 22 weisen weiterhin jeweils eine zumindest über einen Teil des Innenumfanges verlaufende Spaltöffnung, den sogenannten Abgas-Eintrittsspalt 25, auf, der in zumindest anteilmäßig radialer Richtung auf das Turbinenlaufrad 12 hin gerichtet verläuft und durch den der Abgasmassenstrom AM auf das Turbinenlaufrad 12 strömt.

Das Turbinengehäuse 21 weist weiterhin einen Abgasabführkanal 26 auf, der vom axialen Ende des Turbinenlaufrades 12 weg in Richtung der Turboladerachse 2 verläuft und einen Abgasanschlussflansch 27 (auch Auspuff-Anschlussstutzen) zum Anschluss an das Auspuffsystem (nicht dargestellt) des Verbrennungsmotors aufweist. Über diesen Abgasabführkanal 26 wird der aus dem Turbinenlaufrad 12 austretende Abgasmassenstrom AM in das Auspuffsystem des Verbrennungsmotors abgeführt.

Über einen bestimmten Bereich hinweg, zwischen Abgas-Eintrittsspalt 25 und Abgasabführkanal 26, folgt die radiale Innenkontur des Turbinengehäuses 21 der Außenkontur des darin aufgenommenen Turbinenlaufrades 12. Dieser Bereich der Innenkontur des Turbinengehäuses 21 wird als Turbinen-Dichtkontur 28 bezeichnet und bewirkt, dass der Abgasmassenstrom AM möglichst vollständig durch die Laufradbeschaufelung 121 des Turbinenlaufrades 12 strömt und nicht daran vorbei. Insofern ist es erforderlich, dass zwischen Dichtkontur 28 des Turbinengehäuses 21 und Außenkontur des Turbinenlaufrades 12 im Betrieb ein möglichst kleiner Spalt gewährleistet ist, der zwar ein freies Drehen des Turbinenlaufrades 12 erlaubt, jedoch die Umströmungsverluste auf ein Minimum beschränkt.

Bei dem Wastegateventil 29 handelt es sich um eine entsprechende Bypass-Ventil-Einrichtung auf der Turbinenseite. Das Wastegateventil 29 verbindet den Abgaszuführkanal 23 in Strömungsrichtung des Abgasmassenstroms AM vor dem Turbinenlaufrad 12 mit dem Abgasabführkanal 26 in Strömungsrichtung des Abgasmassenstroms AM hinter dem Turbinenlaufrad 12 über einen Wastegatekanal 291 im Turbinengehäuse 21. Das Wastegateventil 29 kann über eine Schließvorrichtung, zum Beispiel eine Wastegateklappe 292, geöffnet oder geschlossen werden.

Weitere Details des Turboladers 1 werden nicht näher erläutert.

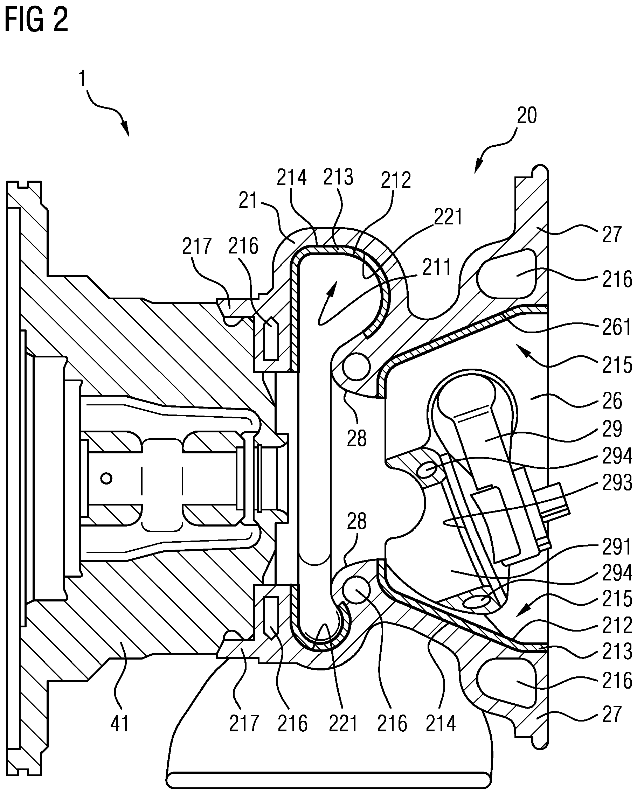

In Figur 2 ist eine Querschnittsteilansicht eines Turboladers 1 gemäß einer Ausführungsform der Erfindung gezeigt, anhand welcher die Ausgestaltung des Turbinengehäuses 21 genauer beschrieben wird. Das Turbinengehäuse 21 zeichnet sich durch eine selektive Kühlung und Wärmeisolierung aus. Es sei darauf hingewiesen, dass Details des in Figur 2 dargestellten Turboladers 1 von dem anhand von Figur 1 erläuterten Turbolader 1 abweichen.

Das Turbinengehäuse 21 ist aus einem Leichtmetallwerkstoff wie Grauguß hergestellt, wobei jedoch auch andere Werkstoffe vorstellbar sind.

Gemäß Figur 2 ist eine Innenwand 221 des Ringkanals 22 mit einem ersten Isolierungselement 211 versehen. Das Isolierungselement 211 ist der Formgebung der Innenwand 221 des Ringkanals 22 angepasst und kleidet diesen zumindest teilweise aus. Das Isolierungselement 211 ist ein Einlegeteil, welches drei Schichten 212 bis 214 aufweist. Die erste Schicht 212 ist im Betrieb dem Abgasmassenstrom AM zugewandt und stellt eine Innenhaut des Isolierungselements 211 dar. Die erste Schicht 212 ist aus einem Metallwerkstoff, beispielsweise einem hochtemperaturfesten Metallwerkstoff, beispielsweise als Metallblech, hergestellt. Die zweite Schicht 213 ist als isolierende Schicht ausgebildet und weist Isoliermaterial wie beispielsweise Keramik auf. Die dritte Schicht 214 ist dem Turbinengehäuse 21, also der Innenwand 221, zugewandt. Die dritte Schicht 214 kann ebenfalls aus einem metallischen hochtemperaturfesten Werkstoff bestehen. Das erste Isolierungselement 211 ist in das Turbinengehäuse 21 eingegossen. Beispielsweise ist lediglich die dritte Schicht 214 eingegossen. Alternativ sind zwei oder alle Schichten 212 bis 214 eingegossen.

Analog zu dem ersten Isolierungselement 211 ist ein zweites Isolierungselement 215 vorgesehen, welches im Bereich des Abgasabführkanals 26 an einer Innenwand 222 des Turbinengehäuses 21 angeordnet ist. Es weist dabei dieselben Schichten 212 bis 214 auf und ist als Einlegeteil ausgebildet. Das zweite Isolierungselement 215 ist ebenfalls in dem Turbinengehäuse 21 eingegossen.

Wie anhand von Figur 2 zu erkennen ist, ist die Dichtkontur 28 des Turbinengehäuses 21 frei von einem Isolierungselement. Weiterhin sind im Bereich eines Lagergehäuseanschlussflansches 217 und des Abgasanschlussflansches 14 keine weiteren thermischen Isolierungen vorgesehen, da in diesen Bereich hohe Toleranzanforderungen gestellt sind, wie eingangs beschrieben.

Weiter ist auch der Bereich des Wastegateventils 29, insbesondere der Wastegatekanal 291, von einer Isolierung ausgespart.

Um für eine ausreichende Kühlung des Turbinengehäuses 21 zu sorgen, sind in den vorgenannten Bereichen lokale Kühlungen vorgesehen. Dabei handelt es sich um Wasserkühlungen, wobei Kühlkanäle 216 in das Turbinengehäuse 21 eingebracht sind, die im Betrieb mit Wasser als Kühlmedium durchströmt werden, um Wärmeenergie aufzunehmen.

Somit sind in den Bereichen, die mechanisch bearbeitet sind und an die hohe Toleranzanforderungen gestellt sind, keine Isolierungselemente, sondern lokale Kühlungen vorgesehen.

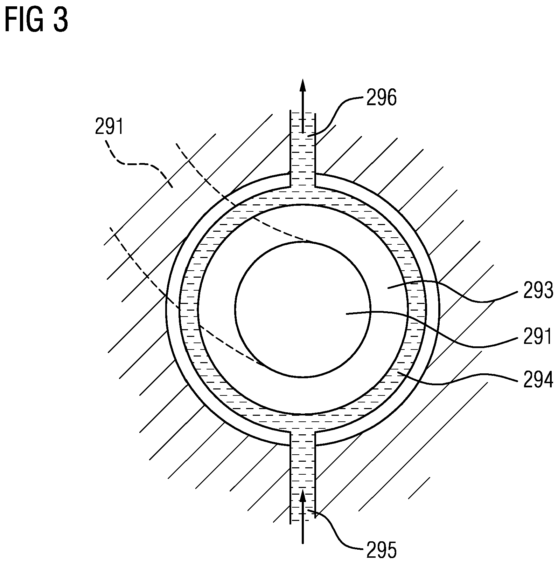

Wie in Figuren 2 und 3 zu erkennen ist, ist eine lokale Kühlung an einem Wastegateventilsitz 293 des Wastegateventils 29 vorgesehen. Dabei handelt es sich um eine innenliegende Wasserkühlung 294 des Wastegateventilsitzes 293, welche kanalartig um den Wastegateventilsitz 293 verläuft, so dass Wasser als Kühlmedium Wärmeenergie aufnehmen kann. Die Wasserkühlung 294 weist einen Wasserzufluss 295 und einen Wasserrückfluss 296 auf. Dies ist schematisch in Figur 3 dargestellt.

Der beschriebene Turbolader 1 zeichnet sich durch die Kombination aus selektiver Isolierung und Wasserkühlung des Turbinengehäuses 21 aus. Wie eingangs erwähnt können dadurch die erwähnten Vorteile und Funktionen erzielt werden. Insbesondere kann ein weniger warmfester Werkstoff, wie beispielsweise ein Leichtmetallwerkstoff, für das Turbinengehäuse 21 verwendet werden, welcher erhebliche Preisvorteile gegenüber hochtemperaturfesten Gusswerkstoffen hat. Aufgrund der Kombination aus selektiver Kühlung und Isolierung ergibt sich ein erhöhter Turbinenwirkungsgrad und somit ein Gesamtwirkungsgrad des Turboladers 1 als beispielsweise bei umfänglich gekühlten, etwa wassergekühlten, Turbinengehäusen. Weiterhin wird erreicht, dass die Bauteiltemperaturen des Turbinengehäuses 21 auf ein benötigtes Niveau gesenkt werden können. Durch das Vorsehen einer lokalen Kühlung im Bereich des Lagergehäuseanschlussflansches 217 kann zudem eine in das Lagergehäuse 41 integrierte lokale Kühlung entfallen, da dieses über das Turbinengehäuse 21 mitgekühlt wird.

Die Isolierungselemente 211 und 215 sind alternativ andersartig ausgestaltet. Beispielsweise weisen eines oder beide Isolierungselemente 211 und 215 einen metallischen Schaum, beispielsweise als zweite Schicht 213, auf. In einer weiteren Alternative sind eines oder beide Isolierungselemente 211 und 215 nicht in das Turbinengehäuse 21 eingegossen, sondern lediglich eingelegt. Dabei kann ein Isolierungselement 211 und/oder 215 mechanisch bei der Montage des Turboladers 1 fixiert, beispielsweise verklemmt, werden. Weiterhin ist es auch denkbar, dass eines oder beide Isolierungselemente 211 und 215 als Beschichtung der entsprechenden Innenwände des Turbinengehäuses 21 aufgebracht sind.

Es sei darauf hingewiesen, dass der anhand von Figuren 2 und 3 beschriebene Turbolader 1 entsprechend dem anhand von Figur 1 schematisch erläuterten Turbolader 1 ausgestaltet sein kann. Dies ist jedoch nicht zwingend nötig. Der Turbolader 1 gemäß Figuren 2 und 3 kann alternative Ausgestaltungen haben.

## Patentansprüche

1. Turbinengehäuse (21) für einen Turbolader (1) einer Brennkraftmaschine, aufweisend
- einen Ringkanal (22) zum Leiten eines Abgasmassenstroms (AM) auf ein in dem Turbinengehäuse (21) anordenbares Turbinenrad (12); und
- einen Abgasabführkanal (26) zum Abführen des Abgasmassenstroms (AM) aus dem Turbinengehäuse (21) nach einem Anströmen des Turbinenrads (12);
wobei in einem Bereich einer Innenwand (221) des Ringkanals (22) und in einem Bereich einer Innenwand (261) des Abgasabführkanals (26) jeweils ein Isolierungselement (211, 215) angeordnet ist, wobei
-- das Turbinengehäuse (21) bezüglich einer Längsachse (2) des Turbinengehäuses (21) zwischen dem Abgasabführkanal (26) und dem Ringkanal (22) eine Dichtkontur (28) aufweist, die frei von einem Isolierungselement ist;
-- das Turbinengehäuse (21) in einem Bereich eines Wastegateventilsitzes (293), eines Lagergehäuseanschlussflansches (217) und eines Abgasanschlussflansches (27) frei von einem Isolierungselement ist; und
-- das Turbinengehäuse (21) eine lokale Kühlung aufweist im Bereich der Dichtkontur (28), im Bereich des Lagergehäuseanschlussflansches (217) und im Bereich des Abgasanschlussflansches (27).

2. Turbinengehäuse (21) nach Anspruch 1,
wobei zumindest eines der Isolierungselemente (211, 215) als Schicht ausgebildet ist, die zumindest teilweise auf die entsprechende Innenwand (221, 261) des Ringkanals (22) und/oder des Abgasabführkanals (26) aufgebracht ist.

3. Turbinengehäuse (21) nach einem der vorhergehenden Ansprüche,
wobei zumindest eines der Isolierungselemente (211, 215) als Einlegeelement ausgebildet ist, welches in das Turbinengehäuse (21) eingelegt, zumindest teilweise eingegossen oder zumindest teilweise umgossen ist.

4. Turbinengehäuse (21) nach Anspruch 3,
wobei das zumindest eine Isolierungselement (211, 215) mehrschichtig ausgebildet ist, wobei auf eine erste Schicht (212), die im Betrieb einem Abgasmassenstrom (AM) zugewandt ist und einen hochtemperaturbeständigen Werkstoff aufweist, eine zweite, isolierende Schicht (213) folgt.

5. Turbinengehäuse (21) nach Anspruch 4,
wobei das zumindest eine Isolierungselement (211, 215) eine dritte Schicht (214) aufweist, die der zweiten Schicht (213) folgt und der entsprechenden Innenwand (221, 261) des Ringkanals (22) und/oder des Abgasabführkanals (26) zugewandt ist.

6. Turbinengehäuse (21) nach Anspruch 5,
wobei die dritte Schicht (214) eine feste Verbindung mit dem Turbinengehäuse (21) eingeht.

7. Turbinengehäuse (21) nach einem der vorhergehenden Ansprüche,
wobei zumindest eines der Isolierungselemente (211, 215) einen metallischen Schaum aufweist.

8. Turbinengehäuse (21) nach einem der vorhergehenden Ansprüche,
wobei das Turbinengehäuse (21) eine lokale Kühlung aufweist im Bereich eines Wastegateventilsitzes (293).

9. Turbolader (1) für eine Brennkraftmaschine, aufweisend
- ein Lagergehäuse (41), in dem eine Läuferwelle (14) drehbar gelagert ist;
- ein Turbinenrad (12), welches drehfest auf der Läuferwelle (14) angeordnet ist; und
- ein Turbinengehäuse (21) nach einem der vorhergehenden Ansprüche, welches mechanisch an dem Lagergehäuse (41) festgelegt ist.

## Claims

1. Turbine housing (21) for a turbocharger (1) of an internal combustion engine, having:
- an annular duct (22) for conducting an exhaust-gas mass flow (AM) to a turbine wheel (12) that is arrangeable in the turbine housing (21); and
- an exhaust-gas discharge duct (26) for discharging the exhaust-gas mass flow (AM) from the turbine housing (21) after impinging on the turbine wheel (12);
wherein an insulating element (211, 215) is arranged in a region of an inner wall (221) of the annular duct (22) and in a region of an inner wall (261) of the exhaust-gas discharge duct (26), respectively, wherein,
- - with respect to a longitudinal axis (2) of the turbine housing (21), the turbine housing (21) has a sealing contour (28), which is free of any insulating element, between the exhaust-gas discharge duct (26) and the annular duct (22);
- - the turbine housing (21) is free of any insulating element in a region of a wastegate valve seat (293), of a bearing-housing connection flange (217) and/or of an exhaust-gas connection flange (27); and
- - the turbine housing (21) has local cooling in the region of the sealing contour (28), in the region of a bearing-housing connection flange (217) and in the region of the exhaust-gas connection flange (27).

2. Turbine housing (21) according to Claim 1,
wherein at least one of the insulating elements (211, 215) is in the form of a layer which is applied at least partially to the corresponding inner wall (221, 261) of the annular duct (22) and/or of the exhaust-gas discharge duct (26).

3. Turbine housing (21) according to one of the preceding claims,
wherein at least one of the insulating elements (211, 215) is in the form of an inlay element which has been inserted into the turbine housing (21) or has been at least partially moulded in or at least partially encapsulated.

4. Turbine housing (21) according to Claim 3,
wherein the at least one insulating element (211, 215) is formed in a multilayer manner, wherein a second insulating layer (213) follows a first layer (212) which, during operation, faces an exhaust-gas mass flow (AM) and exhibits a material resistant to high temperatures.

5. Turbine housing (21) according to Claim 4,
wherein the at least one insulating element (211, 215) has a third layer (214), which follows the second layer (213) and faces the corresponding inner wall (221, 261) of the annular duct (22) and/or of the exhaust-gas discharge duct (26).

6. Turbine housing (21) according to Claim 5,
wherein the third layer (214) forms a firm connection with the turbine housing (21).

7. Turbine housing (21) according to one of the preceding claims,
wherein at least one of the insulating elements (211, 215) exhibits a metal foam.

8. Turbine housing (21) according to one of the preceding claims,
wherein the turbine housing (21) has local cooling in the region of a wastegate valve seat (293).

9. Turbocharger (1) for an internal combustion engine, having
- a bearing housing (41), in which a rotor shaft (14) is mounted in a rotatable manner;
- a turbine wheel (12), which is arranged for conjoint rotation on the rotor shaft (14); and
- a turbine housing (21) according to one of the preceding claims, which is mechanically secured to the bearing housing (41).

## Revendications

1. Carter de turbine (21) destiné à un turbocompresseur (1) d'un moteur à combustion interne, ledit carter de turbine comprenant
- un conduit annulaire (22) destiné à guider un débit massique de gaz d'échappement (AM) sur une roue de turbine (12) qui peut être disposée dans le carter de turbine (21) ; et
- un conduit d'évacuation de gaz d'échappement (26) destiné à évacuer le débit massique de gaz d'échappement (AM) du carter de turbine (21) après un afflux sur la roue de turbine (12) ; un élément isolant (211, 215) étant respectivement disposé dans une région d'une paroi intérieure (221) du conduit annulaire (22) et dans une région d'une paroi intérieure (261) du conduit d'évacuation de gaz d'échappement (26),
-- le carter de turbine (21) comportant, par rapport à un axe longitudinal (2) du carter de turbine (21) entre le conduit d'évacuation de gaz d'échappement (26) et le conduit annulaire (22), un contour d'étanchéité (28) qui est dépourvu d'élément isolant ;
-- le carter de turbine (21) étant dépourvu d'élément isolant dans une région d'un siège de soupape de porte de décharge (293), d'une bride de raccordement de boîtier de palier (217) et d'une bride de raccordement de gaz d'échappement (27) ; et
-- le carter de turbine (21) présentant un refroidissement local dans la région du contour d'étanchéité (28), dans la zone de la bride de raccordement de boîtier de palier (217) et dans la région de la bride de raccordement de gaz d'échappement (27) .

2. Carter de turbine (21) selon la revendication 1,
l'un au moins des éléments isolants (211, 215) étant conçu comme une couche qui est au moins partiellement appliquée sur la paroi intérieure correspondante (221, 261) du conduit annulaire (22) et/ou du conduit d'évacuation de gaz d'échappement (26).

3. Carter de turbine (21) selon l'une des revendications précédentes,
l'un au moins des éléments isolants (211, 215) étant conçu comme un élément d'insertion qui est inséré dans le carter de turbine (21), au moins partiellement coulé dans celui-ci ou au moins partiellement coulé autour de celui-ci.

4. Carter de turbine (21) selon la revendication 3,
l'au moins un élément isolant (211, 215) étant conçu en plusieurs couches, une deuxième couche isolante (213) faisant suite à une première couche (212) qui fait face pendant le fonctionnement à un débit massique de gaz d'échappement (AM) et qui comporte un matériau résistant aux températures élevées.

5. Carter de turbine (21) selon la revendication 4,
l'au moins un élément isolant (211, 215) comportant une troisième couche (214) qui fait suite à la deuxième couche (213) et qui fait face à la paroi intérieure correspondante (221, 261) du conduit annulaire (22) et/ou du conduit d'évacuation de gaz d'échappement (26).

6. Carter de turbine (21) selon la revendication 5,
la troisième couche (214) formant une liaison fixe avec le carter de turbine (21).

7. Carter de turbine (21) selon l'une des revendications précédentes,
l'un au moins des éléments isolants (211, 215) comportant une mousse métallique.

8. Carter de turbine (21) selon l'une des revendications précédentes,
le carter de turbine (21) présentant un refroidissement local dans la région d'un siège de soupape de porte de décharge (293) .

9. Turbocompresseur (1) destiné à un moteur à combustion interne, ledit turbocompresseur comprenant
- un boîtier de palier (41) dans lequel un arbre de rotor (14) est monté de manière rotative ;
- une roue de turbine (12) qui est disposée solidairement en rotation sur l'arbre de rotor (14) ; et
- un carter de turbine (21) selon l'une des revendications précédentes qui est fixé mécaniquement au boîtier de palier (41) .
